(19) Europäisches Patentamt
European Patent Office
Office européen des brevets

(11) **EP 1 596 493 B1**

(12) **EUROPÄISCHE PATENTSCHRIFT**

(45) Veröffentlichungstag und Bekanntmachung des Hinweises auf die Patenterteilung:
**12.11.2008 Patentblatt 2008/46**

(51) Int Cl.:
*H02P 6/08* (2006.01)  *H02P 6/16* (2006.01)
*G01P 3/489* (2006.01)  *H03H 21/00* (2006.01)

(21) Anmeldenummer: **05009197.4**

(22) Anmeldetag: **27.04.2005**

(54) **Verfahren zum Messen der Drehzahl eines EC-Motors**

Method for measuring the speed of an electronically commutated motor

Procédé de mesure de la vitesse d'un moteur à commutation électronique

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **15.05.2004 DE 102004024307**

(43) Veröffentlichungstag der Anmeldung:
**16.11.2005 Patentblatt 2005/46**

(73) Patentinhaber: **LuK Lamellen und Kupplungsbau Beteiligungs KG**
**77815 Bühl (DE)**

(72) Erfinder: **Stork, Holger, Dr.**
**77815 Bühl (DE)**

(56) Entgegenhaltungen:
**US-A- 5 377 535      US-A- 5 511 042**
**US-A- 5 796 228      US-A1- 2004 061 461**

**Beschreibung**

Die Erfindung betrifft ein Verfahren zum Messen der Drehzahl eines EC-Motors, wobei der EC-Motor ein Primärteil mit einer Wicklung und ein Sekundärteil mit in Umfangsrichtung zueinander versetzten, abwechselnd in zueinander entgegengesetzte Richtungen magnetisierten Magnetsegmenten aufweist, die Toleranzen hinsichtlich ihrer Positionierung und/oder ihrer Abmessungen haben, wobei das Sekundärteil relativ zu dem Primärteil verdreht und die Lage der Magnetsegmente relativ zu dem Primärteil detektiert wird, und wobei das Lagemesssignal zur Bildung eines Drehzahlsignals differenziert wird.

Ein derartiges Verfahren zum Messen der Drehzahl eines EC-Motors, welcher zum Betätigen eines hydraulischen Druckmittelgebers vorgesehen ist, ist aus DE 102 32 500 A1 bekannt. Dabei verstellt der Druckmittelgeber eine Kupplung, mit der ein Drehmoment von dem Verbrennungsmotor auf das Schaltgetriebe eines Kraftfahrzeugs übertragbar ist. Während das Sekundärteil des EC-Motors durch Kommutieren der Bestromung der Wicklung relativ zu dem Primärteil bewegt wird, wird die Lage der Magnetsegmente des Sekundärteils relativ zu dem Primärteil mit Hilfe von Hall-Sensoren detektiert. Dabei verändert das Lagemesssignal nach einem Weg bzw. Drehwinkel von jeweils 6° seinen Wert. Zur Bildung des Drehzahlsignals wird das Lagemesssignal differenziert. Um die Auflösung des Drehzahlsignals über den Umfang des EC-Motors zu verbessern, wird der Weg zwischen zwei Sensorsignalen in eine Anzahl von Teilschritten unterteilt. An der Position eines Sensorsignals wird das System synchrorisiert, so dass die aktuelle Drehzahl dann bekannt ist. Von da ab wird mit Hilfe des Modells die Drehzahl von Teilschritt zu Teilschritt berechnet, bis beim nächsten Sensorsignal wiederum synchronisiert wird. Mit Hilfe des Verfahrens kann die Auflösung des Drehzahlsignals über den Umfang verbessert werden.

Da die Magnetsegmente hinsichtlich ihrer Positionierung am Umfang des Sekundärteils und hinsichtlich ihrer Abmessungen in Umfangsrichtung Toleranzen aufweisen, die im Einzelnen nicht näher bekannt sind, ergeben sich jedoch Ungenauigkeiten bei der Synchronisierung des Modells, die auch durch die Unterteilung des Wegs zwischen zwei Sensorsignalen in Teilschritte nicht oder zumindest nicht vollständig ausgeglichen werden. Wenn die Winkellänge zwischen zwei Magnetsegment-Sensor-Kombinationen beispielsweise bei einem EC-Motor mit vier Polpaaren und drei Hallsensoren um ±20% von einem Sollwert abweicht und die Drehzahl des EC-Motors 1000 Umin$^{-1}$ beträgt, wechselt das Lagemesssignal durchschnittlich alle 2,5 ms seinen Wert. Die Zeit zwischen den Wechseln schwankt um ±20%, d.h. von 2ms bis 3ms. Somit variiert die Drehzahl von 833 Umin$^{-1}$ bis 1250 Umin$^{-1}$, d.h. sie kann um etwa 40% von dem vorherigen Wert abweichen. Diese schnellen Sprünge der gemessenen Drehzahl mit Abweichungen von ±20% von der tatsächlichen Drehzahl stören beispielsweise eine Drehzahlregelung erheblich bzw. ermöglichen nur Regelungen mit geringer Dynamik.

Das Drehzahlsignal könnte zwar geglättet werden, indem beispielsweise jeweils aus dem vorletzten, letzten und aktuellen Drehzahlmesswert der Mittelwert gebildet wird. Allerdings würde der gemittelte Drehzahlmesswert die Drehzahl dann nicht zum aktuellen Zeitpunkt widerspiegeln, sondern zum Zeitpunkt des letzten Wechsels des Lagemesssignals.

In der US 2004/0016461 A1 wird eine Maßnahme zur Korrektur von Positionsfehlern von Magnetpositionen beschrieben, bei der der Rotor sich in Drehung befindet, jedoch stromlos geschaltet wird.

Es besteht deshalb die Aufgabe, ein Verfahren der eingangs genannten Art zu schaffen, das auf einfache Weise eine genaue Bestimmung der Drehzahl des EC-Motors ermöglicht.

Die Aufgabe wird durch die Merkmale des Anspruchs 1 gelöst.

Der Erfindung liegt die Erkenntnis zu Grunde, dass bei einem mehrfachen Vorbeibewegen eines toleranzbehafteten Magnetsegments des Sekundärteils an einem ortsfest zum Primärteil angeordneten Magnet-Sensor, das mit Hilfe des Magnet-Sensors detektierte Lagemesssignal für das entsprechende Magnetsegment bei jedem Passieren des Magnet-Sensors stets denselben, durch die Toleranz des Magnetsegments bedingten Fehler aufweist. Dieser Fehler wird durch Messung oder auf andere Weise ermittelt, um dann einen Korrekturwert zu bestimmen, mit dem das Drehzahlsignal zu einem späteren Zeitpunkt korrigiert wird, wenn das betreffende Magnetsegment den Magnetfeld-Sensor erneut passiert. Somit kann eine durch eine Toleranz eines Magnetsegments hervorgerufene Mess-Ungenauigkeit auf einfache Weise in dem Drehzahlsignal korrigiert werden. Dabei ist es sogar möglich, diese Korrektur online bei dem jeweils aktuell gemessenen Drehzahlwert durchzuführen, ohne dass zwischen dem korrigierten Drehzahlwert und dem unkorrigierten Drehzahlwert eine Zeitverzögerung auftritt.

Aus der noch unveröffentlichten deutschen Patentanmeldung 103 55 566.8 ist zwar ein gattungsfremdes Verfahren zum Betreiben eines EC-Motors bekannt, bei dem Korrekturwerte für ein Lagemesssignal ermittelt werden. Mit Hilfe des korrigierten Lagemesssignals werden Kommutierungszeitpunkte bestimmt, an denen die Bestromung der Wicklung des EC-Motors kommutiert wird. Zum Ermitteln der Korrekturwerte wird das Sekundärteil bei stromloser Wicklung relativ zu dem Primärteil bewegt, wobei während der Relativbewegung ein Induktionsspannungs-Messsignal für die von den Magnetsegmenten in der Wicklung induzierten elektrischen Spannungen gemessen wird. Außerdem wird mit Hilfe einer Lagemesseinrichtung, die sich an dem Magnetfeld der Magnetsegmente orientiert, das Lagemesssignal gemessen. Durch einen Vergleich des Lagemesssignals mit dem als Referenzsignal dienenden Induktionsspannungs-Messsignal werden die Korrekturwerte für das Lagemesssignal ermittelt. Ein Verfahren zum Messen der Drehzahl des EC-Motors ist in dieser Patentanmeldung jedoch nicht offenbart.

Bei einer vorteilhaften Ausführungsform der Erfindung wird die Lage der Magnetsegmente mit Hilfe einer Messeinrichtung detektiert, die an dem Primärteil mehrere Magnetfeld-Sensoren aufweist, die derart in Umfangsrichtung des Primärteils zueinander versetzt angeordnet sind, dass pro Umdrehung des Sekundärteils relativ zu dem Primärteil eine Anzahl von Magnetsegment-Sensor-Kombinationen durchlaufen wird, wobei für jede dieser Magnetsegment-Sensor-Kombinationen jeweils ein Korrekturwert ermittelt, gespeichert und zur Korrektur des Drehzahlsignals verwendet wird. Das korrigierte Drehzahlsignal weist dann eine noch größere Genauigkeit auf. Die Anzahl der Magnetsegment-Sensor-Kombinationen entspricht vorzugsweise dem Produkt aus der Anzahl der Magnetfeldsensoren und der Anzahl der magnetischen Pole des Sekundärteils.

Vorteilhaft ist, wenn das Sekundärteil derart relativ zu dem Primärteil verdreht wird, dass eine Anzahl von Magnetsegment-Sensor-Kombinationen durchlaufen wird, wenn mit Hilfe der Messeinrichtung für diese Magnetsegment-Sensor-Kombinationen ein erstes unkorrigiertes Drehzahlsignal erfasst wird, wenn zusätzlich dazu ein Referenzsignal für die Drehzahl des EC-Motors erfasst wird, welches eine größere Genauigkeit aufweist als das unkorrigierte Drehzahlsignal, wenn mit Hilfe des ersten unkorrigierten Drehzahlsignals und des Referenzsignals die Korrekturwerte als Korrekturfaktoren bestimmt werden, wenn die Magnetsegment-Sensor-Kombinationen des ersten unkorrigierten Drehzahlsignals erneut durchlaufen und dabei mit Hilfe der Messeinrichtung ein zweites unkorrigiertes Drehzahlsignal erfasst wird, und wenn dieses Drehzahlsignal mit Hilfe der zuvor ermittelten Korrekturfaktoren korrigiert wird. Die Korrekturwerte werden also in Form von Korrekturfaktoren ermittelt, wodurch eine Korrektur der durch die Toleranzen des Magnetsegments verursachten Messfehlern bei unterschiedlichen Drehzahlen möglich ist. Das Referenzsignal kann ein Messsignal sein, das beispielsweise bei der Fertigung des EC-Motors mit Hilfe einer zusätzlichen Lagemesseinrichtung erfasst wird. Das Referenzsignal kann auch ein Drehzahl- und/oder ein aufintegriertes Beschleunigungssignal einer Welle sein, die mit dem EC-Motor gekoppelt ist.

Bei einer bevorzugten Ausführungsform der Erfindung wird das Referenzsignal dadurch gebildet, dass das erste unkorrigierte Drehzahlsignal durch Filterung geglättet wird. Dadurch kann ein zusätzlicher Sensor zur Messung des Referenzsignals eingespart werden.

Besonders vorteilhaft ist, wenn das Sekundärteil derart relativ zu dem Primärteil verdreht wird, dass die einzelnen Magnetsegment-Sensor-Kombinationen mindestens zwei mal auftreten, wenn dabei für die einzelnen Magnetsegment-Sensor-Kombinationen jeweils ein Korrekturfaktor ermittelt wird, wenn aus den für die einzelnen Magnetsegment-Sensor-Kombinationen ermittelten Korrekturfaktoren jeweils ein Mittelwert gebildet wird, und wenn die so erhaltenen Mittelwerte als neue Korrekturfaktoren gespeichert und das Drehzahlsignal bei einem erneuten Durchlaufen der Magnetsegment-Sensor-Kombinationen mit Hilfe dieser Korrekturfaktoren korrigiert wird. Dadurch kann eine noch größere Präzision bei der Drehzahlsignalgewinnung erreicht werden. Die einzelnen Magnetsegment-Sensor-Kombinationen werden dabei bevorzugt möglichst oft durchlaufen. Dies ist insbesondere bei einem kontinuierlich drehenden EC-Motor der Fall, wie z.B. bei einem EC-Motor für eine elektronische Nockenwellenverstellung (EVT bzw. Electronic Valve Timing). Ein solcher kontinuierlich drehender EC-Motor ermöglicht praktisch immer eine Adaption der Korrekturwerte, so dass die Korrekturfaktoren schnell einen etwa stationären Wert einnehmen.

Bei einer Ausgestaltung der Erfindung wird als Mittelwert jeweils der arithmetische Mittelwert gebildet wird. Dabei gehen sämtliche für die Mittelwertbildung verwendeten Korrekturfaktoren mit demselben Gewicht in den Mittelwert ein.

Bei einer bevorzugten Ausführungsform der Erfindung wird als Mittelwert jeweils ein gleitender Mittelwert gebildet, vorzugsweise derart, dass das Gewicht, mit dem die Korrekturfaktoren in den Mittelwert eingehen, mit zunehmendem Alter der Korrekturfaktoren abnimmt. Neue Korrekturfaktoren werden also in dem Mittelwert stärker berücksichtigt als Korrekturfaktoren, die einem weiter zurückliegenden Zeitpunkt zugeordnet sind. Sollte einmal ein Fehler auftreten, der dazu führt, dass eine Magnetsegment-Sensor-Kombination nicht erkannt und dadurch die bereits ermittelten Korrekturfaktoren den falschen Magnetsegmenten zugeordnet werden, wirkt sich die falsche Korrekturfaktorzuordnung nur kurzeitig auf die Korrektur des Drehzahlsignals aus, d.h. die falschen Korrekturfaktoren werden relativ schnell "vergessen".

Bei einer vorteilhaften Ausgestaltung der Erfindung werden die gleitenden Mittelwerte $F_{Neu}[i(t-T)]$ für die einzelnen Magnetsegment-Sensor-Kombinationen zyklisch nach der Formel $F_{Neu}[i(t-T)] = \lambda\, F_{Alt}[i(t-T)] + (1-\lambda)\, F[i(t-T)]$ bestimmt, wobei i ein die jeweilige Magnetsegment-Sensor-Kombination identifizierender Index, t die Zeit, T eine Verzögerungszeit zwischen der tatsächlichen Geschwindigkeit und der gemessenen Geschwindigkeit, $F_{Alt}[i(t-T)]$ der bei der letzten Mittelwertbildung am Index i ermittelte Mittelwert und $\lambda$ ein Vergessensfaktor bedeuten, der größer als Null und kleiner als 1 ist und vorzugsweise im Intervall zwischen 0,7 und 0,9 liegt. Eine derartige Mittelwertbildung ist insbesondere für eine Online-Berechnung geeignet. Die Zeit T ist von der Drehzahl abhängig und nimmt mit zunehmender Drehzahl ab (ereignisgesteuertes System).

Bei einer zweckmäßigen Ausgestaltung des Verfahrens ist vorgesehen,

a) das Sekundärteil relativ zu dem Primärteil verdreht und die Korrekturfaktoren für die einzelnen Magnetsegment-Sensor-Kombinationen ermittelt und gespeichert werden,

b) dass danach die entsprechenden Magnetsegment-Sensor-Kombinationen erneut durchlaufen werden, wobei ein Satz neuer Korrekturfaktoren ermittelt wird,

c) dass die Korrekturfaktoren des alten Korrekturfaktorsatzes relativ zu denen des neuen Korrekturfaktorsatzes zyklisch vertauscht und die Korrekturfaktorsätze danach miteinander verglichen werden,

d) dass Schritt c) wiederholt wird, bis alle Vertauschungskombinationen des alten Korrekturfaktorsatzes mit dem neuen Korrekturfaktorsatz verglichen wurden,

e) dass die Vertauschungskombination, bei der eine maximale Übereinstimmung mit dem neuen Korrekturfaktorsatz auftritt, ermittelt wird,

f) und dass mit der dieser Vertauschungskombination zugeordneten Anordnung der Korrekturwerte des alten Korrekturfaktorsatzes das Drehzahlsignal korrigiert wird.

Auf diese Weise kann die Zuordnung der Korrekturfaktoren zu den Magnetsegmenten wiederhergestellt werden, falls sie beispielsweise aufgrund einer Störung des Messsignals unbeabsichtigt verändert worden sein sollte. Somit können die bereits ermittelten Korrekturfaktoren auch nach dem Auftreten der Störung weitergenutzt werden. Dabei kann eine Kennung an dem Sekundärteil des EC-Motors, die eine absolute Messung der Lage des Sekundärteils relativ zu dem Primärteil ermöglicht, eingespart werden. In vorteilhafter Weise kann das Verfahren aber auch nach dem Wiedereinschalten des EC-Motors zur Anwendung kommen, um Korrekturfaktoren, die während einer früheren Einschaltphase des EC-Motors ermittelt und in einem nichtflüchtigen Speicher abgelegt wurden, denjenigen Magnetsegment-Sensor-Kombinationen zuzuordnen, für die sie während der früheren Einschaltphase ermittelt wurden. Gegebenenfalls können die Korrekturfaktoren auch unter Idealbedingungen bei der Fertigung des EC-Motors ermittelt werden, vorzugsweise in einem Endstadium der Fertigung.

Gegebenenfalls kann aus den bei der Vertauschungskombination, bei der eine maximale Übereinstimmung zwischen den Korrekturfaktorsätzen auftritt, jeweils einander zugeordneten Korrekturfaktoren des alten Korrekturfaktorsatzes und des neuen Korrekturfaktorsatzes jeweils ein Mittelwert gebildet und als neuer Korrekturfaktor gespeichert werden, wobei mit dem durch diese Mittelwertbildung erhaltenen Korrekturfaktorsatz das Drehzahlsignal korrigiert wird. Es werden also sowohl die Korrekturfaktoren des ersten Datensatzes als auch die des zweiten Datensatzes bei der Korrektur des Drehzahlsignals berücksichtigt.

Bei einer vorteilhaften Ausführungsform des Verfahrens ist vorgesehen,

a) dass das Sekundärteil derart relativ zu dem Primärteil verdreht wird, dass alle Magnetsegment-Sensor-Kombinationen mindestens einmal durchlaufen werden,

b) dass dabei das Lagemesssignal derart generiert wird, dass pro Umdrehung des EC-Motors für jedes Polpaar des Sekundärteils jeweils eine Anzahl von Messsignal-Zuständen durchlaufen wird,

c) dass ein erster Datensatz mit einer der Anzahl der Magnetsegment-Sensor-Kombinationen entsprechenden Anzahl Wertekombinationen, jeweils bestehend zumindest aus einem Korrekturfaktor für die betreffende Magnetsegment-Sensor-Kombination und einem dieser zugeordneten Messsignal-Zustand, ermittelt und gespeichert wird,

d) dass danach die entsprechenden Magnetsegment-Sensor-Kombinationen erneut durchlaufen werden, wobei ein neuer, zweiter Datensatz mit Wertekombinationen ermittelt und gespeichert wird,

e) dass bei einer Abweichung zwischen den Messsignal-Zuständen des ersten und denen des zweiten Datensatzes die Wertekombinationen des ersten Datensatzes derart zyklisch relativ zu denen des zweiten Datensatzes verschoben werden, dass die Messsignal-Zustände der Datensätze übereinstimmen,

f) dass danach die jeweils einander zugeordneten Korrekturfaktoren der Datensätze miteinander verglichen werden,

g) dass die Korrekturfaktoren des einen Datensatzes um eine der doppelten Anzahl der Magnetfeld-Sensoren entsprechende Anzahl Schritte relativ zu den Korrekturfaktoren des anderen Datensatzes zyklisch vertauscht und danach die jeweils einander zugeordneten Korrekturfaktoren der Datensätze miteinander verglichen werden,

h) dass Schritt g) gegebenenfalls wiederholt wird, bis alle Vertauschungskombinationen bearbeitet wurden,

i) dass eine Vertauschungskombination, bei der eine maximale Übereinstimmung zwischen den Korrekturfaktoren der Datensätze auftritt, ermittelt wird,

j) und dass mit der dieser Vertauschungskombination zugeordneten Anordnung der Korrekturwerte des ersten Datensatzes das Drehzahlsignal korrigiert wird.

Durch diese Maßnahmen kann mit relativ wenig Vertauschungs- bzw. Verschiebeoperationen und somit entsprechend geringem Zeitaufwand die Zuordnung der Korrekturfaktoren zu den Magnetsegment-Sensor-Kombinationen wiederhergestellt werden.

Dabei ist es sogar möglich, dass aus den bei der Vertauschungskombination, bei der eine maximale Übereinstimmung zwischen den Korrekturfaktoren der Datensätze auftritt, jeweils einander zugeordneten Korrekturfaktoren des ersten und zweiten Datensatzes jeweils ein Mittelwert gebildet und als neuer Korrekturfaktor gespeichert wird und dass mit dem durch diese Mittelwertbildung erhaltenen Korrekturfaktorsatz das Drehzahlsignal korrigiert wird. Somit werden sowohl die Korrekturfaktoren des ersten Datensatzes als auch die des zweiten Datensatzes bei der Korrektur des Drehzahlsignals berücksichtigt.

Bei einer zweckmäßigen Ausgestaltung des Verfahrens werden die Schwankungsweiten des unkorrigierten Drehzahlsignals und des korrigierten Drehzahlsignals jeweils ermittelt und miteinander verglichen, wobei für den Fall, dass die Schwankungsweite des korrigierten Drehzahlsignals größer ist als die des unkorrigierten Drehzahlsignals, die Korrekturfaktoren neu ermittelt und/oder die Zuordnung der Korrekturfaktoren zu den Magnetsegment-Sensor-Kombinationen wiederhergestellt wird. Dabei wird davon ausgegangen, für den Fall, dass die Schwankung des korrigierten Drehzahlsignals größer ist als die des unkorrigierten Drehzahlsignals, ein Fehler bei der Zuordnung der Korrekturfaktoren zu den einzelnen Magnetsegment-Sensor-Kombinationen aufgetreten ist, beispielsweise durch EMV-Einstrahlung. Zur Korrektur dieses Fehlers können die Korrekturfaktoren auf den Wert 1 zurückgesetzt und danach neu adaptiert worden oder die ursprüngliche Zuordnung wird beispielsweise durch zyklisches Vertauschen der Korrekturfaktoren wiederhergestellt.

Zweckmäßigerweise werden die Korrekturfaktoren auf einen vor gegebenen Wertebereich begrenzt, der vorzugsweise zwischen 0,8 und 1,2 beträgt. Dadurch können Ausreißer in dem korrigierten Drehzahlsignal, die durch nicht plausible, außerhalb des vorgegebenen Wertebereichs liegende Korrekturfaktoren verursacht sind, unterdrückt werden.

Nachfolgend sind Ausführungsbeispiele der Erfindung anhand der Zeichnung näher erläutert. Es zeigen:

Fig. 1 eine schematische Ansicht auf die Stirnseite des Sekundärteils eines EC-Motors, wobei am Umfang des Sekundärteils Magnetsegmente angeordnet sind, und wobei eine Lagemesseinrichtung zur Detektion der Lage des Sekundärteils relativ zum Primärteil vorgesehen ist,

Fig. 2 eine graphische Darstellung eines mit Hilfe der Lagemesseinrichtung erfassten Lagemesssignals,

Fig. 3 ein Ablaufdiagramm, welches die einzelnen Schritte bei der Korrektur eines aus dem Lagemesssignal erzeugten Drehzahlsignals verdeutlicht, und

Fig. 4 eine graphische Darstellung von Korrekturfaktoren, wobei die Beträge der Korrekturfaktoren als Balkendiagramm dargestellt sind, wobei unterhalb des Balkens jeweils ein Wert eines dem betreffenden Korrekturfaktor zugeordneten Lagemesssignals und darunter jeweils ein Index abgebildet sind, der den betreffenden Korrekturfaktor einer Magnetsegment-Sensor-Kombination zuordnet.

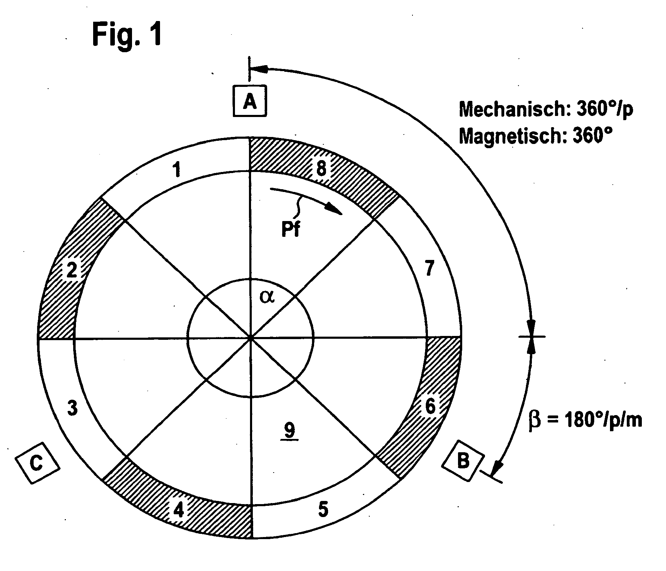

Ein EC-Motor weist ein in der Zeichnung nicht näher dargestelltes, als Stator ausgebildetes Primärteil mit einer Wicklung und ein etwa zylindrisches, als Rotor ausgebildetes Sekundärteil mit in Umfangsrichtung zueinander versetzten, abwechselnd in zueinander entgegengesetzte Richtungen magnetisierten permanentmagnetischen Magnetsegmenten 1..8 auf, die an einem magnetisch gut leitenden Trägerteil 9 angeordnet sind. Bei dem in Fig. 1 gezeigten Ausführungsbeispiel hat das Sekundärteil acht Magnetsegmente 1..8, die in einem Raster von 45° in Umfangsrichtung des Trägerteils 9 zueinander versetzt sind. Die Magnetsegmente 1..8 bilden am Umfang des Sekundärteils jeweils einen Magnetpol, wodurch sich insgesamt über den Umfang eine Anzahl von p Polpaaren ergibt. In Fig. 1 ist dies beispielhaft für ein Sekundärteil mit p=4 Polpaaren dargestellt. Auf dem durch die Magnetsegmente 1..8 gebildeten Ring wechselt die Magnetisierung also 8 mal pro Umdrehung ihre Richtung. Die Magnetsegmente 1..8 weisen sowohl hinsichtlich ihrer Lage auch hinsichtlich ihrer Abmessungen in Umfangsrichtung Toleranzen auf. Der mechanische Winkel $\alpha$ zwischen zueinander korrespondierenden Stellen zueinander benachbarter Magnetsegmente 1..8 kann also von dem Sollwert 180°/p (hier: 45°) abweichen.

Mit Hilfe einer in der Zeichnung nicht näher dargestellten Lagerung ist das Sekundärteil um seine Längsmittelachse relativ zu dem Primärteil verdrehbar gelagert. Die Vorwärtsdrehrichtung des Sekundärteils ist in Fig. 1 mit dem Pfeil Pf angedeutet.

Zur Messung der Drehzahl des Sekundärteils relativ zu dem Primärteil ist eine Lagemesseinrichtung vorgesehen, die an dem Primärteil einen Anzahl von m in Umfangsrichtung zueinander versetzten Magnetfeld-Sensoren A, B, C aufweist, welche das Magnetfeld des jeweils ihnen gegenüberliegenden Magnetfeldabschnitts 1..8 detektieren. Bei dem in Fig. 1 gezeigten Ausführungsbeispiel beträgt die Anzahl der Magnetfeldsensoren m=3. Selbstverständlich sind aber auch andere Werte möglich.

Das Ausgangssignal des Magnetfeldsensors A ändert sich jeweils bei einer Drehung des Sekundärteils um dem Winkel $\alpha$. Mit Hilfe des Magnetfeldsensors A alleine könnte somit eine Auflösung des Sekundärteil-Drehwinkels von $\alpha$ erreicht werden. Wie in Fig. 1 erkennbar ist, sind die Sensoren A, B, C am Umfang des Sekundärteils versetzt zueinander angeordnet. Der Versatz ist derart gewählt, dass das mit Hilfe der Sensoren A, B, C detektierte Lagemesssignal eine Auflösung von 180°/(p·m) aufweist. Dies wird dadurch erreicht, dass der Magnetfeldsensor B um einen mechanischen Winkel von 180°/(m·p) zuzüglich eines ganzzahligen Vielfaches von $\beta$=180°/m gegenüber dem Magnetfeldsensor A und der Magnetfeldsensor C um das Doppelte dieses mechanischen Winkels gegenüber dem Magnetfeldsensor A in Vorwärtsdrehrichtung Pf versetzt ist.

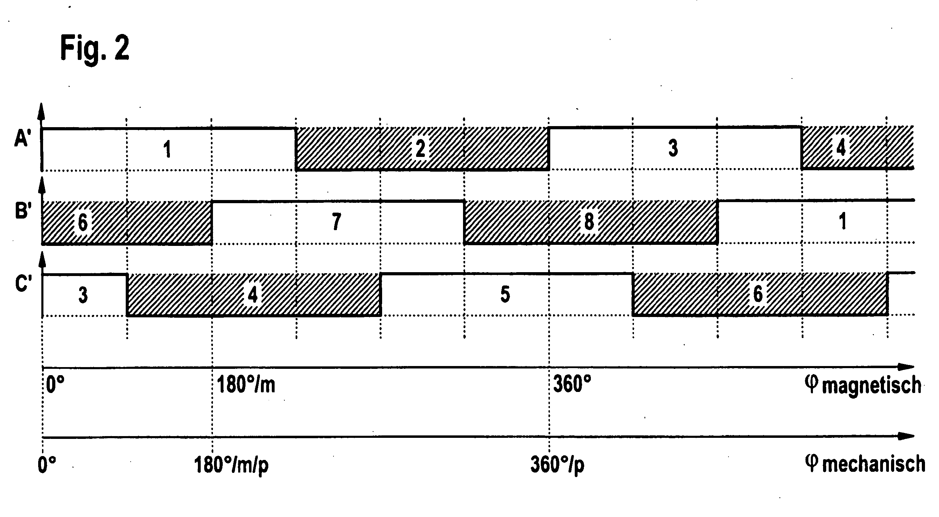

In Fig. 2 ist ein Abschnitt des aus den Ausgangssignalen A', B', C' der Sensoren A, B, C zusammengesetzten Lagemesssignals für eine Rechtsdrehung in Richtung des Pfeils Pf graphisch dargestellt. Dabei ist das Ausgangssignal A' dem Magnetfeldsensor A, das Ausgangssignal B' dem Magnetfeldsensor B usw. zugeordnet. Bei den Ausgangssignalen A', B', C' handelt es ich um Digitalsignale, welche die logischen Werte 1 oder 0 annehmen können. Dabei tritt der Wert 1 auf, wenn dem betreffenden Sensor A, B, C ein einen Nordpol bildendes Magnetsegment 1..8 gegenüberliegt. In entsprechender Weise nimmt das Ausgangssignal A', B', C' den logischen Wert 0 an, wenn dem betreffenden Sensor A, B, C ein einen Südpol bildendes Magnetsegment 1..8 gegenüberliegt. Um die Zuordnung der einzelnen Werte eines Ausgangssignals zu den jeweils gerade an dem betreffenden Sensor A, B, C vorbeibewegten Magnetfeldabschnitt 1..8 zu verdeutlichen, ist an den Ausgangssignalwerten jeweils die Bezugszahl des betreffenden Magnetfeldabschnitts 1..8 wiedergegeben. In Fig. 2 sind unterhalb der Ausgangssignale auf den Abszissen jeweils der magnetische Drehwinkel $\varphi_{magnetisch}$ und der mechanische Drehwinkel $\varphi_{machanisch}$ aufgetragen. Deutlich ist erkennbar, dass bei einer mechanischen Drehung von 360°/p (=90°) das Lagemesssignal nacheinander 2·m (=6) verschiedene Zustände annimmt, die sich danach wiederholen.

Das aus den Ausgangssignalen A', B' und C' zusammengesetzte Lagemesssignal wird zur Auswertung an eine in der Zeichnung nicht näher dargestellte Auswerteeinrichtung übermittelt, die mit den Magnetfeld-Sensoren A, B, C verbunden ist. Der Auswerteeinrichtung sind nur die Ausgangssignale A', B' und C' bekannt, nicht jedoch, welche Magnetsegmente 1..8 gerade an den Sensoren A, B, C vorbeibewegt werden.

In Fig. 2 ist erkennbar, dass immer eine der Magnetsegment-Sensor-Kombinationen gerade aktiv ist. In Fig. 2 sind dies von links nach rechts die Magnetsegment-Sensor-Kombinationen (1,6,3), (1,6,4), (1,7,4), (2,7,4), (2,7,5), (2,8,5) usw. Diese Abfolge von Magnetsegment-Sensor-Kombinationen wiederholt sich, nachdem 2·p Magnetsegmente 1..8 an einem Magnetfeld-Sensor A, B, C vorbeigelaufen sind, also nach einer mechanischen Volldrehung.

Durch Zählen der Wechsel, an denen das Lagemesssignal seinen Wert ändert, wird der Gesamtdrehwinkel des Sekundärteils bestimmt. Ausgehend von einem Startwert, wird bei einer Rechtsdrehung des Sekundärteils der Gesamtwinkel bei jedem Wechsel inkrementiert. Dreht sich das Sekundärteil linksherum, so wechseln die Magnetsegment-Sensor-Kombinationen in entgegengesetzter Reihenfolge. Dies wird von der Auswerteeinrichtung erkannt, so dass diese dann bei jedem Wechsel den Gesamtwinkel dekrementiert.

Das so ermittelte Lagemesssignal wird zur Bildung eines Drehzahlsignals differenziert. Dies kann beispielsweise derart erfolgen, dass die Zeit $\Delta t$ zwischen zwei Änderungen des Lagemesssignals gemessen und das Drehzahl $\omega$ wie folgt bestimmt wird:

$$\omega = \pi / (m \cdot p \cdot \Delta t) \quad [rad/s].$$

Aufgrund der Toleranzen der Magnetsegmente 1..8 ist das so ermittelte Drehzahlsignal $\omega_{Mess,i}$ mit Fehlern behaftet, die beispielsweise bei konstanter tatsächlicher Drehzahl des Sekundärteils dazu führen, dass das Drehzahlsignal Sprünge aufweist.

In der Auswerteeinrichtung werden die Magnetsegment-Sensor-Kombinationen von 1 bis 2·m·p durchnummeriert, so dass bei Rechtsdrehung der Zählwert, der nachstehend kurz als "Index i" bezeichnet wird, hochläuft und bei Erreichen von 2·m·p dann auf 1 springt. Beim Einschalten des EC-Motors wird der Index i auf einen Startwert gesetzt, z.B. auf den Wert 1.

Für jede Magnetsegment-Sensor-Kombination wird nun ein Korrekturfaktor $F_{Adap}[i]$ ermittelt, der über den Index i dem entsprechenden Magnetsegment 1..8 zugeordnet wird. Dieser Korrekturfaktor $F_{Adap}[i]$ entspricht dem Verhältnis zwischen dem Drehzahlwert $\omega_{Mess,i}$, der mit Hilfe des Lagemesssignals für die i-te Magnetsegment-Sensor-Kombination ermittelt wurde, und einem Referenzdrehzahlwert $\omega_{Ref}$, von dem angenommen wird, dass er eine größere Genauigkeit aufweist als der Drehzahlwert $\omega_{Mess,i}$. Die Korrekturfaktoren $F_{Adap}[i]$ werden in einem Datenspeicher der Auswerteeinrichtung abgelegt.

Mit Hilfe des Korrekturfaktors $F_{Adap}[i]$ wird für jeden Drehzahlwert $\omega_{Mess,i}$ jeweils wie folgt ein korrigierter Drehzahlwert $\omega_{Korr,i}$ ermittelt:

$$\omega_{Korr,i} = \omega_{Mess,i} / F_{Adap}[i],$$

Die Korrekturfaktoren $F_{Adap}[i]$ werden in einem Lernvorgang ermittelt. Beim Start des Lernvorgangs werden alle Korrekturfaktoren $F_{Adap}[i]$ jeweils auf den Wert 1 gesetzt, d.h. die korrigierte Drehzahl $\omega_{Korr,i}$ entspricht zunächst der gemessenen Drehzahl $\omega_{Mess,i}$. Während des Lernvorgangs werden die Korrekturfaktoren $F_{Adap}[i]$ auf einen Wertebereich zwischen 0,8 und 1,2 begrenzt, um bei einer eventuellen Fehladaption, die in der Praxis nicht ganz auszuschließen ist, das Fehlerausmaß zu begrenzen.

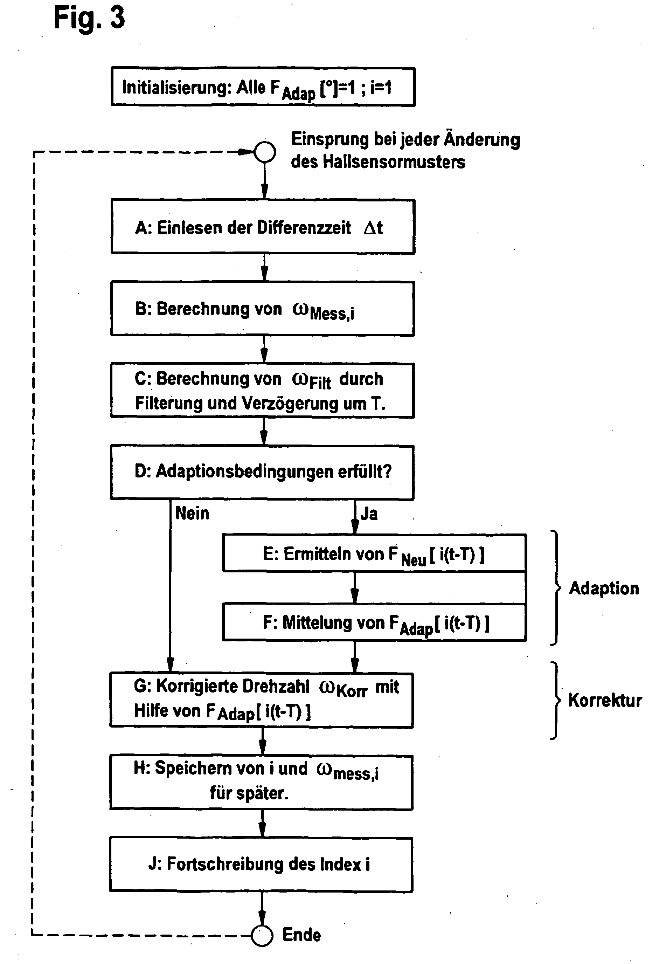

Wie aus Fig. 3 ersichtlich ist, wird die folgende Sequenz immer dann durchlaufen, wenn eine Änderung des Lagemesssignals erkannt wird. Der aktuelle Zeitpunkt wird mit t bezeichnet.

**A**: Die Differenzzeit $\Delta t$ zwischen dem letzten und dem aktuellen Wechsel des Lagemesssignals wird gespeichert. Sie zeigt an, wie lange das Überstreichen der zuvor aktiven Magnetsegment-Sensor-Kombination gedauert hat. Auf den dieser Magnetsegment-Sensor-Kombination zugeordneten Messwert des Lagemesssignals zeigt der Index i, der jeweils am Ende Sequenz für den Aufruf der nächsten Sequenz angepasst wird.

**B**: Berechnung der unkorrigierten Drehzahl $\omega_{Mess,i}$ = $\pi$ / (m·p·$\Delta$t).

**C**: Filtern der unkorrigierten Drehzahl: Da die wahre Drehzahl $\omega_{True}$ unbekannt ist, wird das Referenzsignal für die Drehzahl durch Filterung der unkorrigierten Drehzahl gebildet. Das Ergebnis $\omega_{Ref}$ der Filterung stimmt relativ gut mit der tatsächlichen Geschwindigkeit vor T Sekunden überein, $\omega_{Ref}(t) \approx \omega_{True}(t-T)$. Dabei ist T die Verzögerungszeit des Filters, die von der Art und der Ordnung des Filters abweicht.

**D**: Überprüfen der Adaptionsvoraussetzungen. Beispielsweise wird der Korrekturfaktor nicht adaptiert, wenn sich die Drehrichtung des Sekundärteils geändert hat. Auch wird während einer Phase starker Beschleunigung und/oder Verzögerung des Sekundärteils die Adaption des Korrekturfaktors ausgesetzt, da die gefilterte Drehzahl dann wahrscheinlich mit der tatsächlichen Drehzahl nicht genau übereinstimmt.

**E**: Der tatsächliche Korrekturfaktor zu der letzten Magnetsegment-Sensor-Kombination ergibt sich als Quotient aus der berechneten Drehzahl $\omega_{Mess,i}(t)$ und dem wahren Drehzahlsignal $\omega_{True}(t)$,

$$F_{True}[i] = \omega_{Mess,i}(t) / \omega_{True}(t)$$

Da die wahre Drehzahl $\omega_{True}$ nur mit einer Verzögerung T in Form der Referenzdrehzahl $\omega_{Ref}$ zur Verfügung steht, müssen alle anderen beteiligten Größen ebenfalls verzögert werden. Deshalb sind der Index i und die unkorrigierten Drehzahlwerte $\omega_{Mess,i}$ in einem Schieberegister gespeichert, damit ihre Verzögerungswerte jetzt zur Verfügung stehen. Somit ergibt sich der Korrekturfaktor zu:

$$F[i(t-T)] = \omega_{Mess,i}(t-T) / \omega_{Ref}(t).$$

**F**: Mittelwertbildung für den Korrekturfaktor: Der Korrekturfaktor F weist noch eine gewisse Ungenauigkeit auf, da der Drehzahl-Referenzwert $\omega_{Ref}$ mit dem tatsächlichen Drehzahlwert $\omega_{True}$ nur näherungsweise übereinstimmt. Bei den einzelnen Umdrehungen des Sekundärteils werden deshalb jeweils neue Korrekturfaktoren ermittelt, wobei diese nach und nach für die jeweilige Magnetsegment-Sensor-Kombination ermittelten Korrekturfaktoren durch Bildung eines gleitenden Mittelwerts gemittelt werden:

$$F_{Neu}[i(t-T)] = \lambda \, F_{Alt}[i(t-T)] + (1-\lambda) \, F[i(t-T)]$$

Dabei bedeuten $F_{Neu}$ der jeweils aktuelle Korrekturfaktor-Mittelwert, $F_{Alt}$ der bei dem jeweils vorherigen Taktzyklus ermittelte Mittelwert und $\lambda$ ein Vergessensfaktor, der zwischen 0 und 1 liegen kann. Je größer $\lambda$ ist, desto länger werden vergangene Werte $\omega_{Mess,i}(t)$ berücksichtigt.

**G**: Die Korrektur wird mit den aktuellen Werte i(t) und $\omega_{Mess,i}(t)$ durchgeführt. Mit dem bis dahin adaptierten Korrekturfaktor F[i] wird der Messwert korrigiert:

$$\omega_{Korr,i} = \omega_{Mess}(t) / F[i].$$

Die Korrektur des Drehzahlsignals wird mit Hilfe der zu der gerade zuvor überstrichenen Magnetsegment-Sensor-Kombination durchgeführt, während für die Adaption der Korrekturfaktoren F[i] ältere Werte verwendet werden.

**H**: Speichern von i und $\omega_{Mess,i}$ in das Schieberegister, um später erneut auf diese Werte als Vergangenheitswerte zugreifen zu können.

**J**: Zur Vorbereitung der nächsten Sequenz wird anhand der alten Magnetsegment-Sensor-Kombination die Drehrichtung des Sekundärteils erkannt und der Index i erhöht (Rechtsdrehung) bzw. erniedrigt (Linksdrehung). Über- oder unterschreitet der Index i dabei das Intervall [1 .. 2·p·m], so wird er auf 2·p·m (Unterschreiten) bzw. 1 (Überschreiten) gesetzt. Der Index i benennt jetzt die aktuelle Magnetsegment-Sensor-Kombination.

Ein entscheidender Punkt bei der Adaption ist die Genauigkeit, mit der die tatsächliche Drehzahl angenähert wird. Bei dem vorstehend beschriebenen Ausführungsbeispiel wird diese Näherung durch Filtern der gemessenen Drehzahl erreicht. Es ist aber auch möglich, die bereits korrigierten Drehzahlen zu filtern. Steht ein anderes Messsignal zur Verfügung, von welchem auf die tatsächliche Drehzahl geschlossen werden kann, so kann auch dieses verwendet werden.

Bei Ausschalten der aus dem EC-Motor und der Auswerteeinrichtung bestehenden Vorrichtung werden die 2·p·m gelernten Korrekturfaktoren in einen nichtflüchtigen Datenspeicher der Auswerteeinrichtung geschrieben. Da zu Beginn der Adaption der Index i bei einer Magnetsegment-Sensor-Kombination, die gerade zufällig aktiv war, auf einen willkürlich gewählten Startwert gesetzt und diese Magnetsegment-Sensor-Kombination nach dem Wiedereinschalten der Vorrichtung zunächst nicht bekannt ist, muss die Zuordnung der Korrekturfaktoren zu den Magnetsegment-Sensor-Kombinationen überprüft und beim Feststellen einer fehlerhaften Zuordnung berichtigt werden, damit die Korrekturfaktoren nach dem Wiedereinschalten der Vorrichtung weiterbenutzt werden können.

Die gleiche Problematik besteht bereits während der Adaption, wenn diese beispielsweise aufgrund von Signalstörungen fälschlicherweise durchgeführt oder nicht durchgeführt wird, so dass der Index i falsch fortgeschrieben wird und somit die Korrekturfaktoren Magnetsegment-Sensor-Kombinationen zugeordnet werden, die gegenüber den Magnetsegment-Sensor-Kombinationen, für welche die Korrekturfaktoren ermittelt wurden, verschoben sind. In einem solchen Fall kann die korrigierte Drehzahl $\omega_{Korr}$ deutlich stärker von der tatsächlichen Drehzahl abweichen als die unkorrigierte Drehzahl. Im Datenspeicher der Auswerteeinrichtung ist die korrekte Reihenfolge der 2 m (=6) aufeinander folgenden Lagemesssignal-Zustände gespeichert. Diese wird mit der Reihenfolge der Zustände des Lagemesssignals verglichen. Wird dabei eine Abweichung festgestellt, wird dieser Fehler beim nächsten Aufruf der Sequenz beseitigt. Die Veränderung der Magnetsegment-Sensor-Kombinationen ist nämlich innerhalb von $\pm m$ Änderungen eindeutig. Ist sicher, dass während der Störung die Drehrichtung des Sekundärteils beibehalten wurde, können sogar (2 m-1) Fortschreibungen korrigiert werden.

Die Qualität der Adaption wird dadurch überwacht, dass die Schwankungsweite der unkorrigierten und der korrigierten Drehzahl immer wieder über ein bestimmtes Zeitfenster miteinander verglichen werden. Schwankt die korrigierte Drehzahl stärker als die unkorrigierte Drehzahl, wird auf eine fehlerhafte Zuordnung geschlossen. Die Zuordnung wird dann entweder wiederhergestellt oder die Korrekturfaktoren werden auf 1 gesetzt.

Bei der Wiederherstellung der Zuordnung wird davon ausgegangen, dass die Zahlenfolge der $2 \cdot p \cdot m$ Korrekturfaktoren eine Art charakteristische Signatur darstellt. Adaptiert man einen neuen Satz von Korrekturfaktoren, so müssen diese eine sehr ähnliche Zahlenfolge haben, wobei die neue Zahlenfolge allerdings gegenüber der bisherigen Zahlenfolge verschoben sein kann. Zur Wiederherstellung der Zuordnung wird deshalb die alte Zahlenfolge $2 \cdot p \cdot m$ mal zyklisch verschoben und nach jedem Verschiebschritt mit der bisherigen Zahlenfolge verglichen. Bei derjenigen Vertauschungs- bzw. Verschiebungskombination, bei der die größte Übereinstimmung zwischen der alten und der bisherigen Zahlenfolge auftritt, wird angenommen dass die Zahlenwerte der alten Zahlenfolge den Magnetsegment-Sensor-Kombinationen richtig zugeordnet sind. Mit dieser Zuordnung wird dann die Korrektur des Drehzahlsignals und/oder die weitere Adaption durchgeführt.

Bei einem anderen Ausführungsbeispiel der Erfindung wird folgendermaßen vorgegangen:

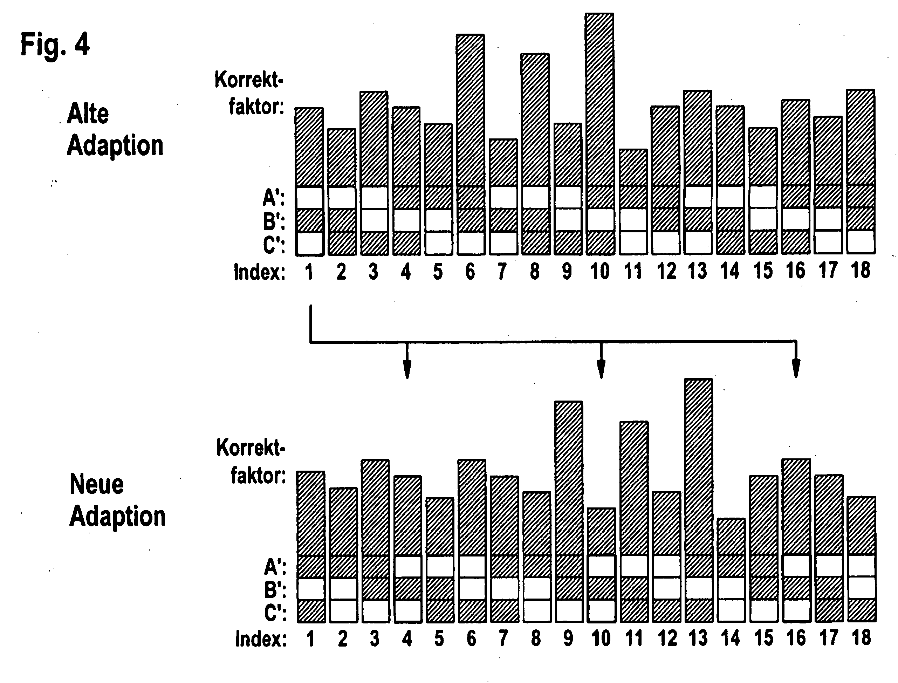

- Zunächst wird ein erster Datensatz mit einer der Anzahl der Magnetsegment-Sensor-Kombinationen entsprechenden Anzahl Wertekombinationen, jeweils bestehend zumindest aus einem Korrekturfaktor für die betreffende Magnetsegment-Sensor-Kombination und einem dieser zugeordneten Messsignal-Zustand, ermittelt und gespeichert. Ein Ausführungsbeispiel eines solchen Datensatzes für einen EC-Motor mit drei Magnetfeldsensoren und drei Polpaaren ist in der oberen Hälfte von Fig. 4 graphisch dargestellt.

- Danach werden die Magnetsegment-Sensor-Kombinationen, für welche die Korrekturfaktoren ermittelt wurden, erneut durchlaufen, wobei ein neuer, zweiter Datensatz mit Wertekombinationen ermittelt und gespeichert wird. Dieser zweite Datensatz ist in Fig. 4 unten graphisch dargestellt.

- Dann werden die Messsignal-Zustände des ersten und des zweiten Datensatzes miteinander verglichen. Wird dabei eine Abweichung festgestellt, werden die Wertekombinationen der Datensätze derart zyklisch relativ zueinander verschoben, dass die Messsignal-Zustände der Datensätze übereinstimmen. Bei dem Ausführungsbeispiel nach Fig. 4 kann dies dadurch erreicht werden, dass die Wertekombinationen der alten Adaption um 3 Positionen zyklisch nach rechts verschoben werden.

- Danach werden die jeweils einander zugeordneten Korrekturfaktoren der Datensätze miteinander verglichen werden, also der Korrekturfaktor mit dem Index i=1 des ersten Datensatzes in Fig. 4 mit dem Korrekturfaktor mit dem Index i=4 des zweiten Datensatzes, der Korrekturfaktor mit dem Index i=2 des ersten Datensatzes mit dem Korrekturfaktor mit dem Index i=5 des zweiten Datensatzes, usw.

- In einem weiteren Schritt werden die Korrekturfaktoren des ersten Datensatzes um eine der doppelten Anzahl der Magnetfeld-Sensoren entsprechende Anzahl Schritte (also $2 \cdot p=6$ Schritte) relativ zu den Korrekturfaktoren des anderen Datensatzes zyklisch vertauscht und danach die jeweils einander zugeordneten Korrekturfaktoren der Datensätze miteinander verglichen. Dieser Schritt wird wiederholt, bis alle Vertauschungskombinationen bearbeitet wurden.

- Danach wird die Vertauschungskombination, bei der eine maximale Übereinstimmung zwischen den Korrekturfaktorsätzen erreicht wird, ermittelt. Mit dieser Vertauschungskombination wird jeweils aus den einander zugeordneten Korrekturfaktoren der Korrekturfaktorsätze ein Mittelwert gebildet und als neuer Korrekturfaktor gespeichert wird. Mit den so ermittelten neuen Korrekturfaktoren wird dann das Drehzahlmesssignal korrigiert.

Es muss also nicht $2 \cdot p \cdot m$ mal geschoben werden. Es muss lediglich herausgefunden werden, welche der p magnetischen Perioden am besten passt. Während der Zeit, in der die neuen Korrekturfaktoren adaptiert werden, wird die korrigierte Drehzahl entweder mit dem Faktor 1 oder mit den bis dahin neu adaptierten Korrekturfaktoren berechnet.

**Bezugszeichenliste**

1 ..8　　Magnetsegment

9    Trägerteil
α    Winkel zwischen zwei Magnetsegmenten
β    Winkel
A    Magnetfeldsensor
B    Magnetfeldsensor
C    Magnetfeldsensor
A'   Ausgangssignal des Magnetfeldsensors A
B'   Ausgangssignal des Magnetfeldsensors B
C'   Ausgangssignal des Magnetfeldsensors C
Pf   Vorwärtsdrehrichtung

**Patentansprüche**

1. Verfahren zum Messen der Drehzahl eines EC-Motors, wobei der EC-Motor ein Primärteil mit einer Wicklung und ein Sekundärteil mit in Umfangsrichtung zueinander versetzten, abwechselnd in zueinander entgegengesetzte Richtungen magnetisierten Magnetsegmenten (1..8) aufweist, die Toleranzen hinsichtlich ihrer Positionierung und/oder ihrer Abmessungen haben, wobei das Sekundärteil relativ zu dem Primärteil verdreht und die Lage der Magnetsegmente (1..8) relativ zu dem Primärteil detektiert wird, das Lagemesssignal zur Bildung eines Drehzahlsignals differenziert wird, und wobeimindestens ein Korrekturwert zum Kompensieren des Einflusses wenigstens einer der Toleranzen auf das Drehzahlsignal erfasst und gespeichert wird, und dass das Drehzahlsignal mit Hilfe des Korrekturwerts korrigiert wird, **dadurch gekennzeichnet, dass** der Korrekturwert einen Mittelwert darstellt, mit dem der aktuell gemessene Drehzahlwert online korrigiert wird.

2. Verfahren nach Anspruch 1, **dadurch gekennzeichnet, dass** die Lage der Magnetsegmente (1..8) mit Hilfe einer Messeinrichtung detektiert wird, die an dem Primärteil mehrere Magnetfeld-Sensoren aufweist, die derart in Umfangsrichtung des Primärteils zueinander versetzt angeordnet sind, dass pro Umdrehung des Sekundärteils relativ zu dem Primärteil eine Anzahl von Magnetsegment-Sensor-Kombinationen durchlaufen wird, und dass für jede dieser Magnetsegment-Sensor-Kombinationen jeweils ein Korrekturwert ermittelt, gespeichert und zur Korrektur des Drehzahlsignals verwendet wird.

3. Verfahren nach Anspruch 1 oder 2, **dadurch gekennzeichnet, dass** das Sekundärteil derart relativ zu dem Primärteil verdreht wird, dass eine Anzahl von Magnetsegment-Sensor-Kombinationen durchlaufen wird, dass mit Hilfe der Messeinrichtung für diese Magnetsegment-Sensor-Kombinationen ein erstes unkorrigiertes Drehzahlsignal erfasst wird, dass zusätzlich dazu ein Referenzsignal für die Drehzahl des EC-Motors erfasst wird, welches eine größere Genauigkeit aufweist als das unkorrigierte Drehzahlsignal, dass mit Hilfe des ersten unkorrigierten Drehzahlsignals und des Referenzsignals die Korrekturwerte als Korrekturfaktoren bestimmt werden, dass die Magnetsegment-Sensor-Kombinationen des ersten unkorrigierten Drehzahlsignals erneut durchlaufen und dabei mit Hilfe der Messeinrichtung ein zweites unkorrigiertes Drehzahlsignal erfasst wird, und dass dieses Drehzahlsignal mit Hilfe der zuvor ermittelten Korrekturfaktoren korrigiert wird.

4. Verfahren nach einem der Ansprüche 1 bis 3, **dadurch gekennzeichnet, dass** das Referenzsignal dadurch gebildet wird, dass das erste unkorrigierte Drehzahlsignal durch Filterung geglättet wird.

5. Verfahren nach einem der Ansprüche 1 bis 4, **dadurch gekennzeichnet, dass** das Sekundärteil derart relativ zu dem Primärteil verdreht wird, dass die einzelnen Magnetsegment-Sensor-Kombinationen mindestens zwei mal auftreten, dass dabei für die einzelnen Magnetsegment-Sensor-Kombinationen jeweils ein Korrekturfaktor ermittelt wird, dass aus den für die einzelnen Magnetsegment-Sensor-Kombinationen ermittelten Korrekturfaktoren jeweils ein Mittelwert gebildet wird, und dass die so erhaltenen Mittelwerte als neue Korrekturfaktoren gespeichert und das Drehzahlsignal bei einem erneuten Durchlaufen der Magnetsegment-Sensor-Kombinationen mit Hilfe dieser Korrekturfaktoren korrigiert wird.

6. Verfahren nach einem der Ansprüche 1 bis 5, **dadurch gekennzeichnet, dass** als Mittelwert jeweils der arithmetische Mittelwert gebildet wird.

7. Verfahren nach einem der Ansprüche 1 bis 6, **dadurch gekennzeichnet, dass** als Mittelwert jeweils ein gleitender Mittelwert gebildet wird, vorzugsweise derart, dass das Gewicht, mit dem die Korrekturfaktoren in den Mittelwert eingehen, mit zunehmendem Alter der Korrekturfaktoren abnimmt.

8. Verfahren nach einem der Ansprüche 1 bis 7, **dadurch gekennzeichnet, dass** die gleitenden Mittelwerte $F_{Neu}[i(t-T)]$ für die einzelnen Magnetsegment-Sensor-Kombinationen zyklisch nach der Formel $F_{Neu}[i(t-T)] = \lambda\ F_{Alt}[i(t-T)] + (1-\lambda)\ F[i(t-T)]$ bestimmt werden, wobei i ein die jeweilige Magnetsegment-Sensor-Kombination identifizierender Index, t die Zeit, T eine Verzögerungszeit zwischen der tatsächlichen Geschwindigkeit und der gemessenen Geschwindigkeit, $F_{Alt}[i(t-T)]$ der bei der letzten Mittelwertbildung am Index i ermittelte Mittelwert und $\lambda$ ein Vergessensfaktor bedeuten, der größer als Null und kleiner als 1 ist und vorzugsweise im Intervall zwischen 0,7 und 0,9 liegt.

9. Verfahren nach einem der Ansprüche 1 bis 8, **da-**

**durch gekennzeichnet**,

a) das Sekundärteil relativ zu dem Primärteil verdreht und die Korrekturfaktoren für die einzelnen Magnetsegment-Sensor-Kombinationen ermittelt und gespeichert werden,

b) dass danach die entsprechenden Magnetsegment-Sensor-Kombinationen erneut durchlaufen werden, wobei ein Satz neuer Korrekturfaktoren ermittelt wird,

c) dass die Korrekturfaktoren des alten Korrekturfaktorsatzes relativ zu denen des neuen Korrekturfaktorsatzes zyklisch vertauscht und die Korrekturfaktorsätze danach miteinander verglichen werden,

d) dass Schritt c) wiederholt wird, bis alle Vertauschungskombinationen des alten Korrekturfaktorsatzes mit dem neuen Korrekturfaktorsatz verglichen wurden,

e) dass die Vertauschungskombination, bei der eine maximale Übereinstimmung mit dem neuen Korrekturfaktorsatz auftritt, ermittelt wird,

f) und dass mit der dieser Vertauschungskombination zugeordneten Anordnung der Korrekturwerte des alten Korrekturfaktorsatzes das Drehzahlsignal korrigiert wird.

10. Verfahren nach Anspruch 9, **dadurch gekennzeichnet, dass** aus den bei der Vertauschungskombination, bei der eine maximale Übereinstimmung zwischen den Korrekturfaktorsätzen auftritt, jeweils einander zugeordneten Korrekturfaktoren des alten Korrekturfaktorsatzes und des neuen Korrekturfaktorsatzes jeweils ein Mittelwert gebildet und als neuer Korrekturfaktor gespeichert wird, und dass mit dem durch diese Mittelwertbildung erhaltenen Korrekturfaktorsatz das Drehzahlsignal korrigiert wird.

11. Verfahren nach einem der Ansprüche 1 bis 9, **dadurch gekennzeichnet,**

a) **dass** das Sekundärteil derart relativ zu dem Primärteil verdreht wird, dass alle Magnetsegment-Sensor-Kombinationen mindestens einmal durchlaufen werden,

b) **dass** dabei das Lagemesssignal derart generiert wird, dass pro Umdrehung des EC-Motors für jedes Polpaar des Sekundärteils jeweils eine Anzahl von Messsignal-Zuständen durchlaufen wird,

c) **dass** ein erster Datensatz mit einer der Anzahl der Magnetsegment-Sensor-Kombinationen entsprechenden Anzahl Wertekombinationen, jeweils bestehend zumindest aus einem Korrekturfaktor für die betreffende Magnetsegment-Sensor-Kombination und einem dieser zugeordneten Messsignal-Zustand, ermittelt und gespeichert wird,

d) **dass** danach die entsprechenden Magnetsegment-Sensor-Kombinationen erneut durchlaufen werden, wobei ein neuer, zweiter Datensatz mit Wertekombinationen ermittelt und gespeichert wird,

e) **dass** bei einer Abweichung zwischen den Messsignal-Zuständen des ersten und denen des zweiten Datensatzes die Wertekombinationen des ersten Datensatzes derart zyklisch relativ zu denen des zweiten Datensatzes verschoben werden, dass die Messsignal-Zustände der Datensätze übereinstimmen,

f) **dass** danach die jeweils einander zugeordneten Korrekturfaktoren der Datensätze miteinander verglichen werden,

g) **dass** die Korrekturfaktoren des einen Datensatzes um eine der doppelten Anzahl der Magnetfeld-Sensoren entsprechende Anzahl Schritte relativ zu den Korrekturfaktoren des anderen Datensatzes zyklisch vertauscht und danach die jeweils einander zugeordneten Korrekturfaktoren der Datensätze miteinander verglichen werden,

h) **dass** Schritt g) gegebenenfalls wiederholt wird, bis alle Vertauschungskombinationen bearbeitet wurden,

i) **dass** eine Vertauschungskombination, bei der eine maximale Übereinstimmung zwischen den Korrekturfaktoren der Datensätze auftritt, ermittelt wird,

j) und **dass** mit der dieser Vertauschungskombination zugeordneten Anordnung der Korrekturwerte des ersten Datensatzes das Drehzahlsignal korrigiert wird.

12. Verfahren nach Anspruch 11, **dadurch gekennzeichnet, dass** aus den bei der Vertauschungskombination, bei der eine maximale Übereinstimmung zwischen den Korrekturfaktoren der Datensätze auftritt, jeweils einander zugeordneten Korrekturfaktoren des ersten und zweiten Datensatzes jeweils ein Mittelwert gebildet und als neuer Korrekturfaktor gespeichert wird, und dass mit dem durch diese Mittelwertbildung erhaltenen Korrekturfaktorsatz das Drehzahlsignal korrigiert wird..

13. Verfahren nach einem der Ansprüche 1 bis 11, **dadurch gekennzeichnet, dass** die Schwankungsweiten des unkorrigierten Drehzahlsignals und des korrigierten Drehzahlsignals in einem Zeitfenster ermittelt und miteinander verglichen werden, und dass für den Fall, dass die Schwankungsweite des korrigierten Drehzahlsignals größer ist als die des unkorrigierten Drehzahlsignals, die Korrekturfaktoren neu ermittelt und/oder die Zuordnung der Korrekturfaktoren zu den Magnetsegment-Sensor-Kombinationen wiederhergestellt wird.

**14.** Verfahren nach einem der Ansprüche 1 bis 12, **dadurch gekennzeichnet, dass** die Korrekturfaktoren auf einen vorgegebenen Wertebereich begrenzt werden, der vorzugsweise zwischen 0,8 und 1,2 beträgt.

**Claims**

**1.** Method for measurement of the rotation speed of an EC motor, with the EC motor having a primary part with a winding and a secondary part with magnet segments (1..8) which are offset with respect to one another in the circumferential direction, are magnetized alternately in mutually opposite directions and are subject to tolerances relating to their positioning and/or their dimensions, with the secondary part being rotated relative to the primary part and with the position of the magnet segments (1..8) relative to the primary part being detected, with the position measurement signal being differentiated in order to form a rotation speed signal, and with at least one correction value for compensation for the influence of at least one of the tolerances on the rotation speed signal being recorded and stored, and in that the rotation speed signal is corrected with the aid of the correction value, **characterized in that** the correction value represents a mean value, by means of which the actually measured rotation speed value is corrected on-line.

**2.** Method according to Claim 1, **characterized in that** the position of the magnet segments (1..8) is detected with the aid of a measurement device which has a plurality of magnetic field sensors on the primary part, which magnetic field sensors are arranged offset with respect to one another in the circumferential direction of the primary part such that a number of magnet segment/sensor combinations are passed through per revolution of the secondary part relative to the primary part, and such that one correction value is in each case determined and stored for each of these magnet segment/sensor combinations, and is used to correct the rotation speed signal.

**3.** Method according to Claim 1 or 2, **characterized in that** the secondary part is rotated relative to the primary part such that a number of magnet segment/sensor combinations are passed through, such that a first uncorrected rotation speed signal is recorded with the aid of the measurement device for these magnet segment/sensor combinations, such that, in addition to this, a reference signal is recorded for the rotation speed of the EC motor, which reference signal is more accurate than the uncorrected rotation speed signal, such that the correction values are determined as correction factors with the aid of the first uncorrected rotation speed signal and the reference signal, such that the magnet segment/sensor combinations of the first uncorrected rotation speed signal are passed through once again and a second uncorrected rotation speed signal is recorded during this process with the aid of the measurement device, and such that this rotation speed signal is corrected with the aid of the previously determined correction factors.

**4.** Method according to one of Claims 1 to 3, **characterized in that** the reference signal is formed by smoothing the first uncorrected rotation speed signal, by filtering.

**5.** Method according to one of Claims 1 to 4, **characterized in that** the secondary part is rotated relative to the primary part such that the individual magnet segment/sensor combinations occur at least twice, such that one correction factor is in each case determined in this case for the individual magnet segment/sensor combinations, such that a mean value is in each case formed from the correction factors determined for the individual magnet segment/sensor combinations, and such that the mean values obtained in this way are stored as new correction factors, and the rotation speed signal is corrected with the aid of these correction factors when passing through the magnet segment/sensor combinations again.

**6.** Method according to one of Claims 1 to 5, **characterized in that** the arithmetic mean value is in each case formed as the mean value.

**7.** Method according to one of Claims 1 to 6, **characterized in that** a sliding mean value is in each case formed as the mean value, preferably such that the weighting used for incorporation of the correction factors in the mean value decreases as the age of the correction factors increases.

**8.** Method according to one of Claims 1 to 7, **characterized in that** the sliding mean values $F_{New}[i(t-T)]$ for the individual magnet segment/sensor combinations are determined cyclically using the formula $F_{New}[i(t-T)]=\lambda F_{old}[i(t-T)]+(1-\lambda)F[i(t-T)]$ where i denotes an index which identifies the respective magnet segment/sensor combination, t denotes the time, T denotes a delay time between the actual speed and the measured speed, $F_{old}[i(t-T)]$ denotes the mean value determined in the last averaging process with the index i, and $\lambda$ denotes a forget factor which is greater than zero and is less than unity, and is preferably in the interval between 0.7 and 0.9.

**9.** Method according to one of Claims 1 to 8, **characterized**

a) **in that** the secondary part is rotated relative to the primary part and the correction factors for the individual magnet segment/sensor combinations are determined and stored,

b) **in that** the corresponding magnet segment/sensor combinations are then passed through once again, with a set of new correction factors being determined,

c) **in that** the correction factors of the old correction factor set are cyclically interchanged relatively with those of the new correction factor set, and the correction factor sets are then compared with one another,

d) **in that** step c) is repeated until all the interchanged combinations of the old correction factor set with the new correction factor set have been compared,

e) **in that** the interchange combinations for which a maximum match occurs with the new correction factor set is determined,

f) **in that** the rotation speed signal is corrected using the arrangement associated with this interchange combination of the correction values of the old correction factor set.

10. Method according to Claim 9, **characterized in that** a mean value is in each case formed from the respectively mutually associated correction factors of the old correction factor set and of the new correction factor set for that interchange combination for which a maximum match occurs between the correction factor sets, and this mean value is stored as a new correction factor, and **in that** the rotation speed signal is corrected using the correction factor set obtained by this averaging process.

11. Method according to one of Claims 1 to 9, **characterized**

a) **in that** the secondary part is rotated relative to the primary part such that all the magnet segment/sensor combinations are passed through at least once,

b) **in that**, in this case, the position measurement signal is generated such that a number of measurement signal states are in each case passed through per revolution of the EC motor for each pole pair of the secondary part,

c) **in that** a first data record with a number of value combinations corresponding to the number of magnet segment/sensor combinations is determined and stored each valve combination comprising at least one correction factor for the relevant magnet segment/sensor combination and a measurement signal state associated with this combination,

d) **in that** the corresponding magnet segment/sensor combinations are then passed through once again, with a new, second data record with value combinations being determined and stored,

e) **in that**, if there is any discrepancy between the measurement signal states of the first and those of the second data record, the value combinations of the first data record are shifted cyclically relative to those of the second data record such that the measurement signal states of the data records match,

f) **in that** the respectively mutually associated correction factors of the data records are then compared with one another,

g) **in that** the correction factors of the one data record are cyclically interchanged through a number (which corresponds to twice the number of magnetic field sensors) of steps relative to the correction factors of the other data record, and the respectively mutually associated correction factors of the data records are then compared with one another,

h) **in that** step g) is repeated, if necessary, until all the interchange combinations have been processed,

i) **in that** an interchange combination for which a maximum match occurs between the correction factors of the data records is determined,

j) and **in that** the rotation speed signal is corrected using the arrangement (associated with this interchange combination) of the correction values of the first data record.

12. Method according to Claim 11, **characterized in that** a mean value is in each case formed from the respectively mutually associated correction factors of the first and second data record for that interchange combination from which a maximum match occurs between the correction factors of the data records, and this mean value is stored as a new correction factor, and **in that** the rotation speed signal is corrected using the correction factor set obtained by this averaging process.

13. Method according to one of Claims 1 to 11, **characterized in that** the fluctuation ranges of the uncorrected rotation speed signal and of the corrected rotation speed signal are determined in a time window and are compared with one another, and **in that**, in the situation in which the fluctuation range of the corrected rotation speed signal is greater than that of the uncorrected rotation speed signal, the correction factors are determined again and/or the association of the correction factors with the magnet segment/sensor combinations is recreated.

14. Method according to one of Claims 1 to 12, **characterized in that** the correction factors are limited to a predetermined value range, which is preferably between 0.8 and 1.2.

**Revendications**

1. Procédé pour mesurer la vitesse de rotation d'un moteur EC, le moteur EC présentant une partie primaire qui comprend un enroulement et une partie secondaire qui comprend des segments d'aimant (1..8) décalés les uns par rapport aux autres dans le sens du pourtour, magnétisés en alternance dans des directions mutuellement opposées, lesquels présentent des tolérances au niveau de leur positionnement et/ou de leurs dimensions, la partie secondaire étant décalée angulairement par rapport à la partie primaire et la position des segments d'aimant (1..8) par rapport à la partie primaire étant détectée, le signal de mesure de la position étant différencié pour former un signal de vitesse de rotation et au moins une valeur de correction destinée à compenser l'influence d'au moins l'une des tolérances sur le signal de vitesse de rotation étant acquise et enregistrée, et que le signal de vitesse de rotation est corrigé à l'aide de la valeur de correction, **caractérisé en ce que** la valeur de correction représente une valeur moyenne avec laquelle la valeur actuellement mesurée de la vitesse de rotation est corrigée en ligne.

2. Procédé selon la revendication 1, **caractérisé en ce que** la position des segments d'aimant (1..8) est détectée à l'aide d'un dispositif de mesure qui présente sur la partie primaire plusieurs détecteurs de champ magnétique qui sont disposés décalés les uns par rapport aux autres dans le sens du pourtour de la partie primaire de telle sorte qu'un nombre donné de combinaisons segment d'aimant/détecteur est parcouru pour chaque tour de la partie secondaire par rapport à la partie primaire et que pour chacune de ces combinaisons segment d'aimant/détecteur est à chaque fois déterminée une valeur de correction, laquelle est enregistrée et utilisée pour corriger le signal de vitesse de rotation.

3. Procédé selon la revendication 1 ou 2, **caractérisé en ce que** la partie secondaire est décalée angulairement par rapport à la partie primaire de telle sorte qu'un nombre donné de combinaisons segment d'aimant/détecteur est parcouru, qu'un premier signal de vitesse de rotation non corrigée est acquis à l'aide du dispositif de mesure pour ces combinaisons segment d'aimant/détecteur, qu'un signal de référence pour la vitesse de rotation du moteur EC est acquis en plus de cela, lequel présente une précision plus grande que le signal de vitesse de rotation non corrigé, que les valeurs de correction faisant office de facteurs de correction sont déterminées à l'aide du premier signal de vitesse de rotation non corrigé et du signal de référence, que les combinaisons segment d'aimant/détecteur parcourent de nouveau le premier signal de vitesse de rotation non corrigé et un deuxième signal de vitesse de rotation non corrigé est ici acquis à l'aide du dispositif de mesure et que ce signal de vitesse de rotation est corrigé à l'aide des facteurs de correction déterminés précédemment.

4. Procédé selon l'une des revendications 1 à 3, **caractérisé en ce que** le signal de référence est configuré de telle sorte que le premier signal de vitesse de rotation non corrigé est lissé par filtrage.

5. Procédé selon l'une des revendications 1 à 4, **caractérisé en ce que** la partie secondaire est décalée angulairement par rapport à la partie primaire, que les combinaisons segment d'aimant/détecteur individuelles apparaissent au moins deux fois, qu'un facteur de correction est à chaque fois déterminé pour les combinaisons segment d'aimant/détecteur individuelles, qu'une valeur moyenne est à chaque fois formée à partir des facteurs de correction déterminés pour les combinaisons segment d'aimant/détecteur individuelles et que les valeurs moyennes ainsi obtenues sont enregistrées en tant que nouveaux facteurs de correction et le signal de vitesse de rotation est corrigé à l'aide de ces facteurs de correction lors d'un nouveau passage devant les combinaisons segment d'aimant/détecteur.

6. Procédé selon l'une des revendications 1 à 5, **caractérisé en ce que** la valeur moyenne calculée est à chaque fois la valeur moyenne arithmétique.

7. Procédé selon l'une des revendications 1 à 6, **caractérisé en ce que** la valeur moyenne calculée est à chaque fois une valeur moyenne glissante, de préférence de telle sorte que le poids avec lequel les facteurs de correction interviennent dans la valeur moyenne diminue à mesure que l'ancienneté des facteurs de correction augmente.

8. Procédé selon l'une des revendications 1 à 7, **caractérisé en ce que** les valeurs moyennes glissantes $F_{Neu}[i(t-T)]$ pour les combinaisons segment d'aimant/détecteur individuelles sont déterminées de manière cyclique d'après la formule $F_{Neu}[i(t-T)] = \lambda F_{Alt}[i(t-T)] + (1-\lambda)F[i(t-T)]$, i étant un index qui désigne la combinaison segment d'aimant/détecteur correspondante, t le temps, T un temps de retard entre la vitesse réelle et la vitesse mesurée, $F_{Alt}[i(t-T)]$ la valeur moyenne déterminée lors du dernier calcul de la valeur moyenne à l'index i et $\lambda$ un facteur d'oubli qui est supérieur à zéro et inférieur à 1 et qui est de préférence compris dans l'intervalle entre 0,7 et 0,9.

9. Procédé selon l'une des revendications 1 à 8, **ca-**

**ractérisé en ce que**

a) **en ce que** la partie secondaire est décalée angulairement par rapport à la partie primaire et les facteurs de correction pour les combinaisons segment d'aimant/détecteur individuelles sont déterminés et enregistrés,

b) **en ce que** les combinaisons segment d'aimant/détecteur correspondantes sont ensuite de nouveau parcourues, un ensemble de nouveaux facteurs de correction étant déterminé,

c) **en ce que** les facteurs de correction de l'ancien ensemble de facteurs de correction sont permutés de manière cyclique par rapport à ceux du nouvel ensemble de facteurs de correction et les ensembles de facteurs de correction sont ensuite comparés entre eux,

d) **en ce que** l'étape c) est répétée jusqu'à ce que toutes les combinaisons de permutations de l'ancien ensemble de facteurs de correction ont été comparées avec celles du nouvel ensemble de facteurs de correction,

e) **en ce que** la combinaison de permutations à laquelle se produit une concordance maximale avec le nouvel ensemble de facteurs de correction est déterminée,

f) et **en ce que** le signal de vitesse de rotation est corrigé avec l'arrangement des valeurs de correction de l'ancien ensemble de facteurs de correction associé avec cette combinaison de permutations.

10. Procédé selon la revendication 9, **caractérisé en ce qu'**une valeur moyenne est à chaque fois déterminée à partir des facteurs de correction de l'ancien ensemble de facteurs de correction et du nouvel ensemble de facteurs de correction respectivement associés les uns aux autres avec la combinaison de permutations à laquelle se produit une concordance maximale entre les ensembles de facteurs de correction, laquelle est enregistrée en tant que nouveau facteur de correction, et que le signal de vitesse de rotation est corrigé avec cet ensemble de facteurs de correction obtenu par ce calcul de valeur moyenne.

11. Procédé selon l'une des revendications 1 à 9, **caractérisé**

a) **en ce que** la partie secondaire est décalée angulairement par rapport à la partie primaire de telle sorte que toutes les combinaisons segment d'aimant/détecteur sont parcourues au moins une fois,

b) **en ce que** le signal de mesure de position est ici généré de telle sorte que pour chaque tour du moteur EC, un nombre donné d'états du signal de mesure est à chaque fois parcouru pour chaque paire de pôles de la partie secondaire,

c) **en ce qu'**un premier ensemble de données, contenant un nombre donné de combinaisons de valeurs correspondant au nombre de combinaisons segment d'aimant/détecteur et constituées à chaque fois d'au moins un facteur de correction pour la combinaison segment d'aimant/détecteur respective et d'un état du signal de mesure qui lui est associé, est déterminé puis enregistré,

d) **en ce que** les combinaisons segment d'aimant/détecteur correspondantes sont ensuite de nouveau parcourues, un deuxième nouvel ensemble de données contenant des combinaisons de valeurs étant déterminé et enregistré,

e) **en ce qu'**en cas d'écart entre les états du signal de mesure du premier et du deuxième ensembles de données, les combinaisons de valeurs du premier ensemble de données sont décalées cycliquement par rapport à celles du deuxième ensemble de données de telle sorte que les états du signal de mesure des ensembles de données coïncident,

f) **en ce que** les facteurs de correction respectivement associés les uns aux autres des ensembles de données sont ensuite comparés entre eux,

g) **en ce que** les facteurs de correction de l'un des ensembles de données sont permutés de manière cyclique par rapport aux facteurs de correction de l'autre ensemble de données d'un nombre de pas égal au double du nombre de détecteurs de champ magnétique et les facteurs de correction respectivement associés les uns aux autres des ensembles de données sont ensuite comparés entre eux,

h) **en ce que** l'étape g) est éventuellement répétée jusqu'à ce que toutes les combinaisons de permutations ont été traitées,

i) **en ce qu'**une combinaison de permutations à laquelle se produit une concordance maximale entre les facteurs de correction des ensembles de données est déterminée,

j) et **en ce que** le signal de vitesse de rotation est corrigé avec l'arrangement des valeurs de correction du premier ensemble de données associé avec cette combinaison de permutations.

12. Procédé selon la revendication 11, **caractérisé en ce qu'**une valeur moyenne est à chaque fois déterminée à partir des facteurs de correction du premier et du deuxième ensembles de données respectivement associés les uns aux autres avec la combinaison de permutations à laquelle se produit une concordance maximale entre les facteurs de correction des ensembles de données, laquelle est enregistrée en tant que nouveau facteur de correction, et que le signal de vitesse de rotation est corrigé avec cet ensemble de facteurs de correction obtenu par ce calcul de valeur moyenne.

**13.** Procédé selon l'une des revendications 1 à 11, **caractérisé en ce que** les amplitudes de fluctuation du signal de vitesse de rotation non corrigé et du signal de vitesse de rotation corrigé sont déterminées dans un créneau temporel et comparées entre elles et que dans le cas où l'amplitude de fluctuation du signal de vitesse de rotation corrigé est supérieure à celle du signal de vitesse de rotation non corrigé, les facteurs de correction sont de nouveau déterminés et/ou l'association des facteurs de correction aux combinaisons segment d'aimant/détecteur est redéfinie.

**14.** Procédé selon l'une des revendications 1 à 12, **caractérisé en ce que** les facteurs de correction sont limités à une plage de valeurs prédéfinie qui est de préférence comprise entre 0,8 et 1,2.

# Fig. 1

Mechanisch: 360°/p
Magnetisch: 360°

$\beta = 180°/p/m$

Fig. 2

# Fig. 3

$$\boxed{\text{Initialisierung: Alle } F_{Adap} \, [°]=1 \; ; \; i=1}$$

**Einsprung bei jeder Änderung des Hallsensormusters**

$$\boxed{\textbf{A: Einlesen der Differenzzeit } \Delta t}$$

$$\boxed{\textbf{B: Berechnung von } \omega_{Mess,i}}$$

$$\boxed{\textbf{C: Berechnung von } \omega_{Filt} \text{ durch Filterung und Verzögerung um T.}}$$

$$\boxed{\textbf{D: Adaptionsbedingungen erfüllt?}}$$

Nein | Ja

$$\boxed{\textbf{E: Ermitteln von } F_{Neu} [\, i(t\text{-}T) \,]}$$

$$\boxed{\textbf{F: Mittelung von } F_{Adap}[\, i(t\text{-}T) \,]}$$

} **Adaption**

$$\boxed{\textbf{G: Korrigierte Drehzahl } \omega_{Korr} \text{ mit Hilfe von } F_{Adap}[\, i(t\text{-}T) \,]}$$

} **Korrektur**

$$\boxed{\textbf{H: Speichern von i und } \omega_{mess,i} \text{ für später.}}$$

$$\boxed{\textbf{J: Fortschreibung des Index i}}$$

**Ende**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10232500 A1
- US 20040016461 A1
- DE 10355566